# EUROPÄISCHE PATENTSCHRIFT

(11) **EP 0 654 374 B1**
(45) Veröffentlichungstag und Bekanntmachung des Hinweises auf die Patenterteilung: **08.10.1997**
(21) Anmeldenummer: 94117717.2
(22) Anmeldetag: 10.11.1994
(51) Int. Cl.: B60P 7/08

(54) **Zurreinrichtung in Aufbautenwänden von Lastkraftwagen**
Tie-down device in the side walls of a lorry
Dispositif d'amarrage dans les parois d'un camion

(30) Priorität: 23.11.1993 DE 4339768
(43) Veröffentlichungstag der Anmeldung: 24.05.1995
(73) Patentinhaber: Spier GmbH & Co. Fahrzeugwerk KG, D-32839 Steinheim (DE)
(72) Erfinder: Spier, Willi, 32839 Steinheim (DE)
(74) Vertreter: Hanewinkel, Lorenz, Dipl.-Phys.

(56) Entgegenhaltungen:
- DE-A- 2 227 132
- DE-A- 2 637 499
- DE-U- 8 702 944
- US-A- 3 125 036

## Beschreibung

Die Erfindung bezieht sich auf eine Zurreinrichtung in Aufbautenwänden von Lastkraftwagen, insbesondere in Plywoodplatten, welche eine Vielzahl an im Abstand übereinander in waagerechten Reihen angeordnete Zurrtöpfe mit in jedem Zurrtopf liegendem, mittig verlaufenden Stab aufweist und die Zurrtöpfe in Aussparungen der Aufbautenwand mindestens nahezu bündig zur Wandfläche von der Aufbauten-Innenseite her eingesetzt und lagefestgelegt sind.

Eine derartig aufgebaute Zurreinrichtung ist aus der DE-A-26 37 499 bekannt geworden, bei der die Zurrtöpfe als kreisförmige Zylindertöpfe ausgebildet und mittels Gewinde in einer Sacklochbohrung der Aufbautenwand festgelegt worden sind.

Hierbei ist einerseits die Ausführung des Zurrtopfes mit Gewinde und die Erstellung der Sacklochbohrung umständlich und aufwendig und diese Gewindeverbindung kann bei stärkeren Zurrkräften leicht aus der Aufbautenwand ausreißen, so daß keine sichere Festlegung der Zurrtöpfe in der Wand gegeben ist.

Weiterhin wird in dieser Patentanmeldung ein kreisförmiger zylindrischer Zurrtopf offenbart, der an seinem Boden einen außen überstehenden Flansch aufweist und in eine Durchgangsbohrung der Wand eingesetzt wird.

Hierbei soll die Verbindung zwischen Topf und Wand durch einen Kleber erfolgen.

Die zylindrische Ausbildung von Bohrung und Zurrtopf ergibt dabei jedoch eine unzureichende Klebefläche, so daß die Klebeverbindung bei Krafteinwirkungen nicht ausreichend sein dürfte.

Das Durchführen (Einfädeln und Herausziehen) des Zurrgurtes ist aufgrund der zylindrischen Topfform schwierig.

Weiterhin ist die Herstellung der zylindrischen Zurrtöpfe mit Gewinde bzw. mit Bodenflansch verhältnismäßig aufwendig und kostspielig.

Aufgabe der Erfindung ist es, eine nach der eingangs genannten Art aufgebaute Zurreinrichtung mit einfach und kostengünstig herstellbaren, in Aussparungen der Aufbautenwand, vorzugsweise Plywoodplatte, mit vergrößerten Verbindungsflächen sicher festlegbaren Zurrtöpfen auszustatten, welche ein bequemes Durchführen (Ein- und Ausführung) der Zurrgurte ermöglichen.

Diese Aufgabe wird erfindungsgemäß durch die kennzeichnenden Merkmale des Patentanspruches 1 gelöst; die sich daran anschließenden Unteransprüche beinhalten Gestaltungsmerkmale, welche vorteilhafte und förderliche Weiterbildungen der Aufgabenlösung darstellen.

Die erfindungsgemäße Zurreinrichtung ist mit besonders gestalteten und festlegbaren Zurrtöpfen ausgestattet, welche in günstiger Weise eine kegelstumpfförmige Topfform aufweisen und in einer entsprechenden kegelstumpfförmigen Ausfräsung der Plywoodplatte mittels Kleber festgelegt werden.

Durch die kegelstumpfförmige Ausbildung vom Topf und der Ausfräsung hat der Topf eine vergrößerte Verbindungsfläche mit der Plywoodplatte und insbesondere mit deren Schichten erhalten; weiterhin wird dieser Zurrtopf unter Druck in die Ausfräsung eingebracht, so daß eine sichere und stabile Verbindung zwischen Topf und Plywoodplatte durch den Kleber entsteht.

Der Zurrtopf läßt sich durch seine kegelstumpfförmige Form in einfacher und kostengünstiger Weise aus Metall durch Tiefziehen herstellen, er kann jedoch aber auch einstückig aus Aluminium- oder Zink-Druckguß oder Kunststoff kostengünstig hergestellt werden.

Durch den kegelstumpfförmigen Mantel hat der Zurrtopf günstige Ein- und Ausführflächen für die Zurrgurte erhalten, welche bequem dann unter dem Mittelstab ein-, durch- und wieder herausgeführt werden können.

Weiterhin von Vorteil ist der Mittelstab mit den abgebogenen Längenenden, welche mit dem konischen Mantel des Zurrtopfes einen rechten Winkel einschließen, so daß in diesen Stoßbereichen keine spitzen Kanten entstehen und die Gurte an den Rändern beschädigungsfrei durch die Zurrtöpfe geführt werden können.

Auf den Zeichnungen ist ein Ausführungsbeispiel in Variation dargestellt, welches nachfolgend näher erläutert wird. Es zeigt:
- Fig. 1: eine Vorderansicht einer Aufbautenwand mit darin in Reihen festgelegten Zurrtöpfen,
- Fig. 2: einem Querschnitt durch einen kegelstumpfförmigen Zurrtopf mit endseitig abgebogenen Längenenden des Stabes, gemäß Schnittlinie I-I in Fig. 3,
- Fig. 3: eine Draufsicht auf den Zurrtopf mit auf seinem Flansch vorgesehenen Einbaumarkierungen,
- Fig. 4: einen Querschnitt durch den kegelstumpfförmigen Zurrtopf mit auf seiner gesamten Länge geraden Stab und in die Aufbautenwand in zwei eingesetzten Ausführungen,
- Fig. 5: einen vergrößerten Ausschnitt durch den Flansch des Zurrtopfes und der Aufbautenwand mit den zusammenwirkenden Einbaumarkierungen.

Die Zurreinrichtung in Aufbautenwänden (1) von Lastkraftwagen, insbesondere in Plywoodplatten, weist eine Vielzahl an im Abstand übereinander in waagerechten Reihen angeordnete Zurrtöpfe (2) mit in jedem Zurrtopf (2) liegenden, mittig verlaufenden Stab (3) auf; diese Zurrtöpfe (2) sind in Aussparungen (4) der Aufbautenwand (1) mindestens nahezu bündig zur Wandfläche (1a) von der Aufbauten-Innenseite her eingesetzt und lagefestgelegt.

Jeder Zurrtopf (2) hat eine kegelstumpfförmige, sich zum Topfboden (5) hin verjüngende Topfform und zeigt an der offenen Topfseite einen außen umlaufenden, parallel zum Topfboden (5) verlaufenden Flansch (6).

Jeder Zurrtopf (2) ist in einer kegelstumpfförmigen Ausfräsung (4) mindestens mit seinem Topfmantel (7) und Topfboden (5) eingesetzt und durch einen Kleber (K) in der Ausfräsung (4) befestigt.

Der Topfmantel (7) des Zurrtopfes (2) steht zum Topfboden (5) unter einem spitzen Windel (α) von vorzugsweise ca. 60°.

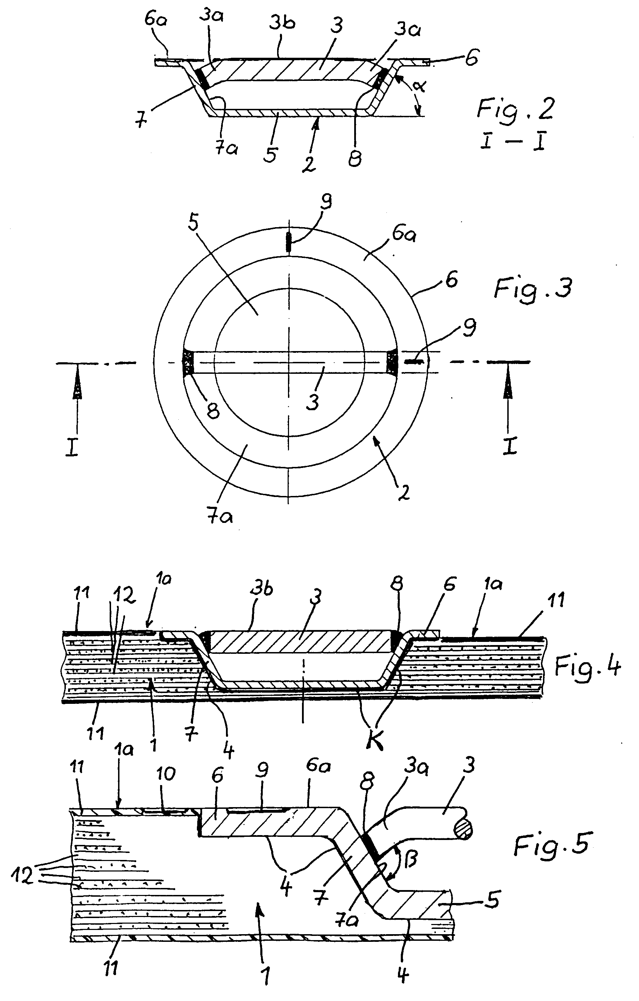

Der Stab (3) gemäß Fig. 4 ist auf seiner gesamten Länge geradlinig ausgebildet und stößt mit seinen beiden Längenenden gegen die Innenseite (7a) des Topfmantels (7).

Der gerade Stab (3) nach Fig. 2 weist zwei abgebogene, gegen die Innenseite (7a) des Topfmantels (7) stoßende und mit dem Topfmantel (7) einen mindestens nahezu rechten Winkel (β) einschließende Längenenden (3a) auf.

Der gerade oder beidendseitig abgebogene Stab (3) ist als Rundstab ausgebildet und verläuft mit seiner äußeren Längskante (3b) bündig zu der Flansch-Außenseite (6a), so daß der Topf (2) mit Stab (3) eine bündige geöffnete Topfseite hat.

Der Zurrtopf (2) ist in bevorzugter Weise aus Metall einstückig tiefgezogen und der Stab (3) mit seinen Stirnenden an der Innenseite (7a) des Topfmantels (7) durch Schweißen (8) befestigt.

Es ist weiterhin bevorzugt, den Zurrtopf (2) mit Stab (3) einstückig aus Aluminium- oder Zink-Druckguß oder aus Kunststoff herzustellen.

Auf der Außenseite (6a) des Flansches (6) jedes Zurrtopfes (2) sind zwei unter einem rechten Winkel zueinander stehende, von Erhöhungen und/oder Vertiefungen, wie Rillen od. dgl., gebildete Einbaumarkierungen (9) vorgesehen, von denen eine in Verlängerung des Stabes (3) verläuft und die andere quer dazu steht (Fig. 3).

In der Aufbautenwand (1) ist eine von einer Vertiefung, wie Rille, gebildete Gegenmarkierung (10) für den Topfeinbau mit senkrecht oder waagerecht verlaufendem Stab (3) ausgenommen, wie in Fig. 5 gezeigt.

Durch den konischen Topfmantel (7) sind gute Ein- und Ausführflächen für den unter dem Stab (3) durchzuführenden Zurrgurt geschaffen worden.

Die Aufbautenwand (1) ist als Plywoodplatte mit an beiden Außenseiten vorgesehenen glasfaserverstärkten Kunststoffschichten (11) und mehreren dazwischen überkreuz angeordneten Schichten (12) aus Holz gebildet und diese Holzschichten sind miteinander verleimt.

Durch die kegelstumpfförmige Ausfräsung (4) ist für den Zurrtopf (2) eine vergrößerte Anlagefläche in der Ausfräsung (4) geschaffen worden, so daß der Topf (2) sich mit den einzelnen Holzschichten (12) mittels des Klebers (K) sehr gut und fest verbinden kann.

Der Zurrtopf (2) läßt sich, wie die linke Hälfte der Fig. 4 zeigt, auch mit seinem Flansch (6) in die Aufbautenwand (1) versenkt einsetzen, so daß die Flansch-Außenseite (6a) bündig zur Außenseite der Kunststoffschicht (11) und somit Wandfläche (1a) liegt.

Weiterhin kann der Topf (2) mit seinem Flansch (6) auf der Kunststoffschicht (11) und somit Wandfläche (1a) aufliegen, wie die rechte Hälfte von Fig. 4 zeigt.

Dieses ist wahlweise und abhängig von der Stärke der Plywoodwand (1) durchführbar.

Der Zurrtopf (2) wird in die Ausfräsung (4) unter Druck eingesetzt, wodurch sich der Kleber (K) zwischen Topfmantel (7), Topfboden (5), Flansch (6) fest mit der Ausfräsung (4) und auch der Kunststoffschicht (11) (bei Ausführung rechte Hälfte Fig. 4) verbindet.

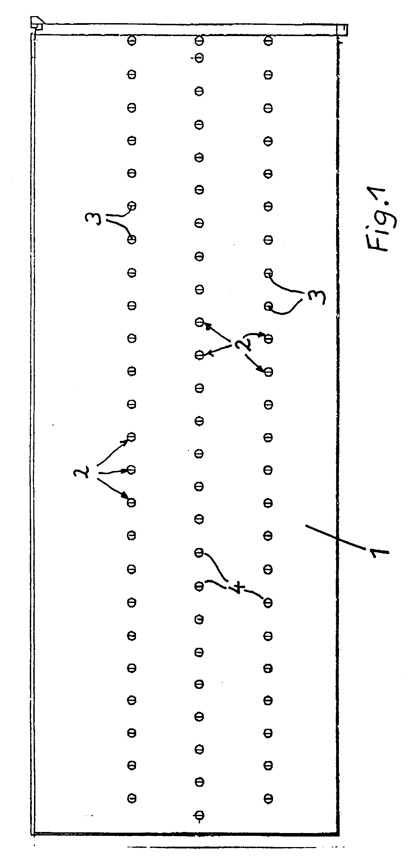

Die Zurrtöpfe (2) werden in der Plywoodwand (1) für die Zurrzwecke mit senkrecht stehenden Stäben (3) eingebaut, wie Fig. 1 zeigt. Es besteht aber auch die Möglichkeit, die Zurrtöpfe (2) mit waagerecht verlaufenden Stäben (3) einzubauen, wobei dann die Stäbe (3) Auflager für Zwischenböden in dem Aufbau bilden.

Für diese zwei Einbauarten und für einen lagerichtigen Einbau sind die Markierungen (10, 11) am Zurrtopf (2) und der Plywoodplatte (1) vorgesehen.

Der Zurrtopf (2) hat in bevorzugter Ausführung einen Flansch-Außendurchmesser von 76 mm, einen Topf-Öffnungsdurchmesser von 58 mm und eine Gesamthöhe von 16 mm sowie eine Wandstärke von 2 mm; der Stab (3) hat als Rundstab einen Durchmesser von 9 mm. Die Plywoodplatte (1) zeigt eine Stärke von 17 mm oder 20 mm.

## Patentansprüche

1. Zurreinrichtung in Aufbautenwänden (1) von Lastkraftwagen, insbesondere in Plywoodplatten, welche eine Vielzahl an im Abstand übereinander in waagerechten Reihen angeordnete Zurrtöpfe (2) mit in jedem Zurrtopf liegendem, mittig verlaufenden Stab (3) aufweist und die Zurrtöpfe in Aussparungen (4) der Aufbautenwand mindestens nahezu bündig zur Wandfläche (1a) von der Aufbauten-Innenseite her eingesetzt und lagefestgelegt sind,
dadurch gekennzeichnet, daß
- jeder Zurrtopf (2) eine kegelstumpfförmige, sich zum Topfboden (5) verjüngende Topfform hat und
- an der offenen Topfseite einen außen umlaufenden, parallel zum Topfboden (5) verlaufenden Flansch (6) aufweist und
- in einer kegelstumpfförmigen Ausfräsung (4) mindestens mit seinem Topfmantel (7) und Topfboden (5) eingesetzt und durch einen Kleber (K) in der Ausfräsung (4) befestigt ist.

2. Zurreinrichtung nach Anspruch 1, dadurch gekennzeichnet, daß der Topfmantel (7) des Zurrtopfes (2) zum Topfboden (5) unter einem spitzen Winkel (α) von vorzugsweise ca. 60° steht.

3. Zurreinrichtung nach Anspruch 1 oder 2, dadurch gekennzeichnet, daß der Stab (3) auf seiner gesamten Länge geradlinig ausgebildet ist und mit seinen beiden Längenenden gegen die Innenseite des Topfmantels (7) stößt.

4. Zurreinrichtung nach Anspruch 1 oder 2, dadurch gekennzeichnet, daß der gerade Stab (3) zwei abgebogene, gegen die Innenseite (7a) des Topfmantels (7) stoßende und mit dem Topfmantel (7) einen mindestens nahezu rechten Winkel (β) einschließende Längenenden (3a) aufweist.

5. Zurreinrichtung nach einem der Ansprüche 1 bis 4, dadurch gekennzeichnet, daß der gerade oder endseitig abgebogene Stab (3) als Rundstab ausgebildet ist und mit seiner äußeren Längskante (3b) bündig zu der Flansch-Außenseite (65a) verläuft.

6. Zurreinrichtung nach einem der Ansprüche 1 bis 5, dadurch gekennzeichnet, daß der Zurrtopf (2) aus Metall einstückig tiefgezogen und der Stab (3) mit seinen Stirnenden an der Innenseite (7a) des Topfmantels (7) angeschweißt ist.

7. Zurreinrichtung nach einem der Ansprüche 1 bis 5, dadurch gekennzeichnet, daß der Zurrtopf (2) mit Stab (3) einstückig aus Aluminium- oder Zink-Druckguß oder aus Kunststoff besteht.

8. Zurreinrichtung nach einem der Ansprüche 1 bis 7, dadurch gekennzeichnet, daß auf der Außenseite (6a) des Flansches (6) jedes Zurrtopfes (2) zwei unter einem rechten Winkel zueinander stehende, von Erhöhungen und/oder Vertiefungen, wie Rillen od. dgl., gebildete Einbaumarkierungen (9) vorgesehen sind, von denen eine in Verlängerung des Stabes (3) verläuft und in der Aufbautenwand (1) eine von einer Vertiefung, wie Rille, gebildete Gegenmarkierung (10) für den Topfeinbau mit senkrecht oder waagerecht verlaufendem Stab (3) ausgenommen ist.

## Claims

1. Lashing device in superstructure walls (1) of lorries, especially in plywood panels, which has a multiplicity of lashing pots (2) disposed one above the other at a distance apart in horizontal rows and having a centrally running bar (3) situated in each lashing pot, and the lashing pots are inserted from the inner side of the superstructure and laid in positionally fixed arrangement in cavities (4) in the superstructure wall such that they lie at least virtually flush with the wall surface (1a), characterised in that
- each lashing pot (2) has a frustoconical pot shape which tapers towards the pot base (5), and
- has, on the open pot side, an outer-skirting flange (6) which runs parallel to the pot base (5), and
- is inserted, at least with its pot casing (7) and pot base (5), in a frustoconical milled recess (4) and is fastened in the milled recess (4) by an adhesive (K).

2. Lashing device according to Claim 1, characterised in that the pot casing (7) of the lashing pot (2) stands at an acute angle (α) of preferably ca. 60° to the pot base (5).

3. Lashing device according to Claim 1 or 2, characterised in that the bar (3) is of straight-line configuration over its entire length and butts with its two longitudinal ends against the inner side of the pot casing (7).

4. Lashing device according to Claim 1 or 2, characterised in that the straight bar (3) has two bent-off longitudinal ends (3a), which butt against the inner side (7a) of the pot casing (7) and form an at least virtual right-angle (β) with the pot casing (7).

5. Lashing device according to one of Claims 1 to 4, characterised in that the bar (3), which is straight or is bent-off at the end side, is configured as a round bar and runs with its outer longitudinal edge (3b) flush with the outer side (65a) of the flange.

6. Lashing device according to one of Claims 1 to 5, characterised in that the lashing pot (2) is deep-drawn from metal in one piece and the bar (3) is welded with its end faces to the inner side (7a) of the pot casing (7).

7. Lashing device according to one of Claims 1 to 5, characterised in that the lashing pot (2) with integral bar (3) consists of aluminium or zinc die-casting or of plastic.

8. Lashing device according to one of Claims 1 to 7, characterised in that on the outer side (6a) of the flange (6) of each lashing pot (2) there are provided two installation markings (9), which stand at right-angles to each other and are formed by elevations and/or indentations, such as grooves or the like, one of which runs in extension of the bar (3), and in the superstructure wall (1) a counter-marking (10) is recessed, formed by an indentation, such as a groove, for installation of a pot with vertically or horizontally running bar (3).

## Revendications

1. Dispositif d'amarrage dans les parois (1) de la caisse de camions, notamment en plaques de plywood, présentant un grand nombre de pots d'amarrage (2) disposés, à intervalle, les uns aux dessus des autres, en rangées horizontales, une tige (3) s'étendant centralement dans chaque pot d'amarrage et les pots d'amarrage (2) étant fixés, positionnés, dans des évidements (4) pratiqués dans la paroi de la caisse du camion, au moins presque à surface plane par rapport à la surface (1a) de la paroi, à partir de la face intérieure de la caisse du camion,
caractérisé en ce que
- chaque pots d'amarrage (2) présente la forme d'un cône tronqué s'amincissant en direction du fond (5) du pot
et que
- son côté ouvert est équipé d'une bride (6) qui s'étend parallèlement à son fond (5), côté exté extérieur
et que
- chaque pot est logé, au moins avec son enveloppe (7) et son fond (5), dans une fraisure (4) en forme de cône tronqué et est fixé dans cette fraisure (4) à l'aide d'une colle (K).

2. Dispositif d'amarrage selon la revendication 1,
caractérisé en ce que
l'enveloppe (7) pots d'amarrage (2) est placé, en direction du fond (5), sous un angle aigu (α) qui est, préférentiellement, d'environ 60°

3. Dispositif d'amarrage selon la revendication 1 ou 2,
caractérisé en ce que
la tige (3) est rectiligne sur toute sa longueur et que ses deux extrémités longitudinales portent contre la surface intérieure de l'enveloppe (7) du pot.

4. Dispositif d'amarrage selon la revendication 1 ou 2,
caractérisé en ce que
la tige droite (3) présente deux extrémités longitudinales coudées qui portent contre la surface intérieure (7a) de l'enveloppe (7) du pot et forment avec l'enveloppe (7) du pot un angle au moins presque droit (β).

5. Dispositif d'amarrage selon l'une des revendications 1 à 4,
caractérisé en ce que
que la tige (3) droite ou coudée aux extrémités est une tige ronde et que son bord longitudinal, extérieur (3b) est à niveau avec le côté extérieur (6a) de la bride.

6. Dispositif d'amarrage selon l'une des revendications 1 à 5,
caractérisé en ce que
le pot d'amarrage (2) est en métal embouti d'une seule pièce et que la tige (3) est soudée, par ses extrémités frontales, à la surface intérieure (7a) de l'enveloppe (7) du pot.

7. Dispositif d'amarrage selon l'une des revendications 1 à 5,
caractérisé en ce que
le pot d'amarrage (2) avec tige (3) est formé d'une pièce en aluminium ou en zink moulé sous pression ou en matière plastique.

8. Dispositif d'amarrage selon l'une des revendications 1 à 7,
caractérisé en ce que,
sur le côté extérieur (6a) de la bride (6) de chaque pot d'amarrage (2), deux marques de montage (9) placées sous un angle droit par rapport l'une à l'autre et formées par des saillies et/ou des cavités telles que rainures etc., marques (9) dont l'une s'étend en prolongement de la tige (3), tandis qu'une contre-marque (10), formée par une cavité, telle qu'une rainure, est pratiquée dans la paroi (1) de la caisse du camion pour l'incorporation du pot avec tige (3) verticale ou horizontale.
